(19) Europäisches Patentamt
European Patent Office
Office européen des brevets

(11) Veröffentlichungsnummer: **0 220 602**
**A1**

# (12) EUROPÄISCHE PATENTANMELDUNG

(21) Anmeldenummer: **86114232.1**

(22) Anmeldetag: **15.10.86**

(51) Int. Cl.⁴: **C08F 8/00**, C08F 8/42, C08F 297/04

(30) Priorität: **24.10.85 DE 3537772**

(43) Veröffentlichungstag der Anmeldung: **06.05.87 Patentblatt 87/19**

(84) Benannte Vertragsstaaten: **BE DE FR GB IT NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**
Erfinder: **Gerberding, Karl, Dr.**
**In der Dreispitz 9**
**D-6706 Wachenheim(DE)**
Erfinder: **Jenne, Helmut, Dr.**
**Grosser Moench 6**
**D-6905 Schriesheim(DE)**

## (54) Transparente, schlagzähe Styrol-Block-Polymerisate und Verfahren zu ihrer Herstellung.

(57) Block-Polymerisate von vinylaromatischen Verbindungen und konjugierten Dienen mit Säureendgruppen, die als Lithiumsalze vorliegen und wobei die Blockpolymerisate ein Aluminumkomplex bilden. Ein Verfahren zur Herstellung derartiger Komplexe und die Verwendung dieser Block-Polymerisatkomplexe als Formmassen und zur Modifizierung thermoplastischer Massen.

EP 0 220 602 A1

## Transparente, schlagzähe Styrol-Block-Polymerisate und Verfahren zu ihrer Herstellung

Die Erfindung betrifft Block-Polymerisate aus Vinylaromaten und konjugierten Dienen mit Säureendgruppen, die als Lithiumsalz und Komplex einer Aluminiumverbindung vorliegen.

Es ist bekannt, daß man durch Polymerisation von Styrol und Butadien mit Lithium-Kohlenwasserstoffen als Initiatoren Blockcopolymerisate erhalten kann, bei denen ein oder mehrere nichtelastomere Polymerblöcke mit einem oder mehreren elastomeren Polymerblöcken verbunden sind. Je nach dem Gehalt der Polymerblöcke im Gesamtpolymerisat zeigen diese thermoplastischen Blockcopolymerisate nicht-elastomere oder elastomere Eigenschaften. Durch aufeinanderfolgende Polymerisation der Monomeren ergeben sich Blockcopolymerisate mit linearer Struktur. Wenn man solche linearen Blockcopolymere über funktionelle reaktionsfähige Verbindungen miteinander kuppelt, resultieren verzweigte Blockcopolymerisate, wie sie beispielsweise in der GB-PS 985 614 beschrieben sind. Diese haben dabei eine symmetrische Struktur und zeigen im allgemeinen eine verbesserte Verarbeitbarkeit gegenüber den linearen Blockcopolymerisaten.

Es ist weiterhin bekannt, daß Styrol-Butadien-Blockcopolymerisate mit hohem Styrolgehalt klare, -schlagzähe thermoplastische Produkte sind. Auch wenn die bisher entwickelten und vorgeschlagenen Blockcopolymerisate dieser Art in mancher Hinsicht zufriedenstellende Eigenschaften besitzen, so erfüllen sie dennoch nicht viele von der Praxis hergestellte Forderungen.

In der DE-OS 19 59 922 werden verzweigte Blockcopolymerisate mit sternförmiger Struktur aus einem überwiegenden Anteil Styrol und einem geringeren Anteil eines konjugierten Diens beschrieben, die Schlagfestigkeit, Klarheit, gute Verarbeitbarkeit und äußere Beständigkeit in einem Polymerisat vereinen sollen. Diese verzweigten Blockcopolymerisate werden durch Kuppeln von Styrol-Dien-Zweiblockcopolymerisaten erhalten, in denen die endständigen Polystyrol-Blöcke unterschiedliche Blocklängen besitzen, wodurch eine unsymmetrische Struktur in den verzweigten Blockcopolymerisaten erzielt wird. Diese Produkte zeigen gegenüber den symmetrischen verzweigten Blockcopolymerisaten wohl verbesserte Eigenschaften, doch vermögen sie hinsichtlich ihres mechanischen Niveaus, insbesondere hinsichtlich ihrer Schlagzähigkeit, nicht vollkommen zufrieden zu stellen.

Blockpolymerisate von Styrol und Butadien, die mit Lithiumkohlenwasserstoffen als Initiator erhalten werden und die Carboxylendgruppen tragen, sind bekannt. So z.B. aus der DE-OS 27 23 905, wobei man diese Verbin dungen dadurch erhält, daß man zunächst Styrol und anschließend Butadien der anionischen Polymerisation unterwirft und dann das lebende Blockpolymerisat mit Alkylenoxid, z.B. Ethylenoxid, umsetzt und das Umsetzungsprodukt schließlich einer weiteren Reaktion mit einem cyclischen Dicarbonsäureanhydrid unterwirft. Man erhält Blockpolymerisate, die eine Carboxylendgruppe tragen. Derartige Blockpolymerisate haben je nach Styrolgehalt unterschiedliche Eigenschaften, z.B. können solche mit hohem Styrolgehalt als thermoplastische Kunststoffe Verwendung finden. Es zeigte sich, daß die mechanischen und verarbeitungstechnischen Eigenschaften zwar in den meisten Fällen für einen bestimmten Zweck ausreichen, jedoch für manche Anwendungen noch verbesserungsbedürftig sind.

Aufgabe der Erfindung war es, die mechanischen und die verarbeitungstechnischen Eigenschaften derartiger Block-Polymerisate mit Carbexylendgruppen, die als Lithiumsalze vorliegen, zu verbessern.

Es wurde nun gefunden, daß diese Aufgabe durch Block-Polymerisate mit Carboxylendgruppen gelöst wird, die als Salze der allgemeinen Formel vorliegen

$[R^1\text{-}Y_a\text{-}X^{\ominus}]\ Li^{\oplus}\ [Al(OR^2)_3]_n$

worin

$R^1$ ein Block-Polymerisat einer monovinylaromatischen Verbindung und eines konjugierten Diens das 60 bis 95 Gew.% von monovinylaromatischen Verbindungen und 40 bis 5 Gew.% von konjugierten Dienen einpolymerisiert enthalten,

Y eine Alkylenoxideinheit,

X eine Gruppierung der allgemeinen Formel

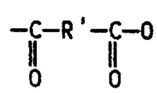

worin R' ein zweiwertiger organischer Rest ist,
$R^2$ Wasserstoff oder ein Alkylrest,
a eine Zahl von 1 bis 10 und
n eine Zahl zwischen 0,3 bis 3 sein kann.

Ein weiterer Gegenstand der Erfindung ist ein Verfahren zur Herstellung derartiger Block-Polymerisaten durch anionische Polymerisation von Vinylaromaten und konjugierten Dienen, Umsetzung der erhaltenen Block-Polymerisate mit Alkylenoxid und cyclischen Säureanhydriden, wobei man die erhaltenen Umsetzungsprodukte weiter mit Aluminiumverbindungen umsetzt.

Außerdem sind Gegenstände dieser Erfindung die Verwendung derartiger Block-Polymerisate in thermoplastische Massen, z.B. zur Modifizierung thermoplastischer Massen, oder als Komponente in Formmassen.

Weitere Gegenstände der Erfindung ergeben sich aus der nachfolgenden Beschreibung.

Die erfindungsgemäßen Block-Polymerisate zeichnen sich durch hohe Transparenz und Klarheit, sehr gute Schlagzähigkeit bei hoher Steifigkeit sowie guter Verarbeitbarkeit z.B. zu Folien aus, so daß sie insbesondere zur Herstellung von Blasfolien verwendet werden können. Außerdem zeigte es sich, daß die unter Verwendung derartiger Block-Polymerisate hergestellten Formmassen besonders arm an "Stippen" sind.

In den genannten Polymerisaten ist $R^1$ ein Radikal eines Block-Polymerisats einer vinylaromatischen Verbindung und eines konjugierten Diens, das durch Lithiumalkyl-Katalyse auf den Ausgangsmonomeren erhalten wurde. Ausgangsstoffe für diese Block-Polymerisate sind monovinylaromatische Monomere, wie Styrol, seitenkettenalkylierte Styrole, wie α-Methylstyrol und die kernsubstituierten Styrole, wie Vinyltoluol oder Ethylvinylbenzol. Die monovinylaromatischen Monomeren können auch in Mischungen eingesetzt werden. Bevorzugt ist jedoch Styrol für sich allein. Beispiele von konjugierten Dienen, die in die Block-Polymerisate einpolymerisiert werden, sind Butadien, Isopren oder 2,3-Dimethylbutadien. Besonders günstig ist Butadien oder Isopren, wobei wiederum Butadien bevorzugt ist.

Die Radikale R der Blockcopolymerisate der Erfindung sollen insgesamt 60 bis 95 Gew.%, insbesondere 70 bis 90 Gew.% der monovinylaromatischen Verbindung und 40 bis 5 Gew.%, vorzugsweise 30 bis 10 Gew.% des konjugierten Diens, jeweils bezogen auf die insgesamt eingesetzten Monomeren, einpolymerisiert enthalten. Das Molekulargewicht der Polymeren liegt dabei in der Regel im Bereich von 30 000 bis 500 000 und beträgt vorzugsweise 50 000 bis 200 000. Bei diesen Angaben handelt es sich um das Gewichtsmittel des MG, bestimmt durch Viskositätsmessungen in Toluol bei 25°C.

Die erfindungsgemäßen Blockcopolymerisate werden durch aufeinanderfolgende Polymerisation der Monomeren in Lösung in Gegenwart eines Monolithiumkohlenwasserstoffes als Initiator unter stufenweiser Monomer-und gegebenenfalls auch Initiatorzugabe, anschließende aufeinanderfolgende Umsetzung zunächst mit einem Alkenyloxid, einem cyclischen Säureanhydrid und einer Aluminiumverbindung hergestellt.

Das Blockpolymerisat $R^1$ kann so aufgebaut sein wie A-B, wobei A die Polymerisateinheit symbolisiert, die die monovinylaromatischen Monomeren ein polymerisiert enthält und der Block B den Polymerisatanteil darstellt, der aus den konjugierten Dienen aufgebaut ist. In diesem Fall kann entweder der Block A oder der Block B mit der Alkylenoxid-Einheit Y verbunden sein. Es können aber auch Blockpolymerisate vom Typ A-B-A oder B-A-B Verwendung finden. Die Blockgruppierungen können sich mehrfach wiederholen. Bevorzugt sind solche Polymerisateinheiten R, die lediglich aus zwei Blöcken A und B bestehen, wobei der Block B mit der Alkylenoxideinheit Y verbunden ist. Besonders bevorzugt sind Polymerisateinheiten R aus 3 Blöcken A-B-A bestehen, woobei einer der Blöcke A mit der Alkylenoxideinheit Y verbunden ist. Die Polymerblöcke bzw. Segmente A haben eine Molmasse, die im Bereich von 1500 bis 150 000, vorzugsweise im Bereich von 5000 bis 100 000 liegt und die Polymerblöcke bzw. Segmente B haben eine Molmasse von 2000 bis 200 000, vorzugsweise im Bereich von 20 000 bis 100 000. Der Übergang zwischen zwei Polymerblöcken A und B kann abrupt erfolgen (scharf getrennte Blöcke) oder der Übergang kann allmählich erfolgen (verschmierte oder kegelförmige Blöcke).

Solche Block-Polymerisate mit verschmierten oder kegelförmigen Blöcken erhält man, wenn man Mischungen aus z.B. Styrol und Butadien der Polymerisation unterwirft. Es können aber auch solche Blockpolymerisate Verwendung finden, worin die Blöcke A und Blöcke B Copolymerisate aus den monovinylaromatischen Monomeren und den konjugierten Dienen sind. Die Glasübergangstemperatur der Polymerblöcke bzw. Segmente A liegt bei solchen Polymerisaten bei mehr als 0°C, vorzugsweise über 20°C. Die Polymerblöcke bzw. Segmente B haben eine Glasübergangstemperatur von unter 0°C, vorzugsweise unter -15°C. Der Blockpolymerisatanteil R kann auch so aufgebaut sein, daß die olefinischen Doppelbindungen, die von den Dienbausteinen herrühren, ganz oder teilweise hydriert sind.

In der bevorzugten Ausführungsform wird zunächst das nicht-elastische Polymersegment A' hergestellt, indem man einen wesentlichen Teil der Gesamtmenge der monovinylaromatischen Verbindung mittels einer relativ kleinen Menge des Monolithium-Kohloenwasserstoffinitiator in einem inerten Lösungsmittel unter üblichen Bedingungen polymerisiert. Hierbei sollen 50 bis 80 Gew.% vorzugsweise 60 bis 75 Gew.%, der Gesamtmenge der monovinylaromatischen Verbindung, die insgesamt für die Herstellung der verzweigten Blockcopolymerisate verwendet wird, eingesetzt werden.

Die Menge an eingesetztem Initiator in der ersten Verfahrensstufe richtet sich vor allem nach dem gewünschten Molekulargewicht des Polymerisats und liegt im allgemeinen im Bereich 0,1 bis 10 mMol pro Mol der in dieser ersten Verfahrensstufe eingesetzten monovinylaromatischen Verbindungen. Vorzugsweise werden für die Polymerisation in der ersten Verfahrensstufe 0,2-1,5 mMol Initiator pro Mol der hierbei eingesetzten monovinylaroma tischen Verbindungen verwendet. Als Initiator dienen die bekannten Monolithium-Kohlenwasserstoffe der allgemeinen Formel RLi, worin R einen aliphatischen, cycloaliphatischen, aromatischen oder gemischt aliphatisch-aromatischen Kohlenwasserstoffrest darstellt. Der Kohlenwasserstoffrest kann 1 bis etwa 12 Kohlenstoffatome besitzen. Als Beispiele für die erfindungsgemäß einzusetzenden Lithiumkohlenwasserstoff-Initiatoren seien genannt: Methyllithium, Ethyllithium, (n-, sec.-, tert.-)Butyllithium, Isopropyllithium, Cyclohexyllithium; Phenyllithium oder p-Tolyllithium. Vorzugsweise werden die Monolithiumalkylverbindungen mit 2 bis 6 Kohlenstoffatomen in der Alkylgruppe eingesetzt, wobei n-Butyllithium und sec.-Butyllithium besonders bevorzugt sind.

Die Polymerisation der monovinylaromatischen Verbindungen wird dabei in Lösung in einem inerten organischen Kohlenwasserstoff-Lösungsmittel durchgeführt. Geeignete Kohlenwasserstoff-Lösungsmittel sind aliphatische, cycloaliphatische oder aromatische Kohlenwasserstoffe, die unter Reaktionsbedingungen flüssig sind und vorzugsweise 4 bis 12 Kohlenstoffatome enthalten. Als Lösungsmittel kommen beispielsweise in Betracht: Benzol, Toluol, die Xylole und andere. Ebenso können Gemische dieser Lösungsmittel eingesetzt werden. Ferner ist es möglich, die Polymerisation in Gegenwart geringer Mengen, im allgemeinen $10^{-3}$ bis 5 Gew.%, bezogen auf das Gesamtlösungsmittel, an Ethern, wie Tetrahydrofuran, Dimethoxyethan, Phenylmethylether und anderen, durchzuführen, wodurch in bekannter Weise die Polymerisationsgeschwindigkeit, die Konfiguration der Butadienpolymerisat-Segmente B sowie auch der statistische Übergang zwischen den Segmenten B und $A^3$ beeinflußt werden kann. Vorzugsweise wird jedoch ohne Etherzusatz gearbeitet. Die Konzentration der Monomeren in der Reaktionslösung ist nicht kritisch und kann so eingesetzt werden, daß jede gewünschte Vorrichtung für die Polymerisation verwendet werden kann.

Üblicherweise wird in 10-bis 30-prozentigen Lösungen der inerten Lösungsmittel polymerisiert.

Die Polymerisation erfolgt unter den für die anionische Polymerisation mit lithiumorganischen Verbindungen üblichen Bedingungen, wie z.B. Inertgas-Atmosphäre unter Luft-und Feuchtigkeitsausschluß. Die Polymerisationstemperatur kann zwischen 0 und 120°C liegen und wird vorzugsweise zwischen 40 und 80°C gehalten.

Die Polymerisation in dieser ersten Verfahrensstufe wird bis zur praktisch vollständigen Umsetzung der eingesetzten monovinylaromatischen Verbindungen geführt. Man erhält so eine Lösung von nicht-elastomeren, lebenden Polymeren aus den monovinylaromatischen Verbindungen (Polymer segment A') mit aktiven, endständigen Lithium-Kohlenstoff-Bindungen, welche zur weiteren Anlagerung von Monomeren fähig sind.

In der zweiten Verfahrensstufe werden zu dieser Lösung der nicht-elastomeren lebenden Polymeren auf Basis der monovinylaromatischen Verbindungen mit den polymerisationsaktiven, lithiumterminierten Kettenenden eine weitere zusätzliche Initiator-Menge und weitere 1 bis 30 Gew.%, vorzugsweise 5 bis 25 Gew.%, der Gesamtmenge der für die Herstellung der verzweigten Blockcopolymerisate insgesamt verwendeten monovinylaromatischen Verbindungen zusgesetzt. Die Summe der in der ersten und zweiten Verfahrensstufe eingesetzten Menge an monovinylaromatischen Verbindung soll dabei jedoch höchstens 90 Gew.% der Gesamtmenge der monovinylaromatischen Verbindung, die insgesamt für die Herstellung der verzweigten Blockcopolymerisate verwendet wird, betragen.

Die Menge an frischem Initiator, die der Reaktionslösung in der zweiten Verfahrensstufe zusätzlich zugegeben wird, ist vorzugsweise gleich groß oder größer als die ursprüngliche Initiatormenge, die in der ersten Verfahrensstufe der Polymerisation eingesetzt worden ist. Besonders bevorzugt wird in der zweiten Verfahrensstufe das 1-bis 15-fache der ursprünglich eingesetzten Initiatormenge an weiterem frischem Initiator zugesetzt. Besonders günstig sind 3-bis 7-fache zusätzliche Initiatormengen. Als Initiator kommen dabei die Monolithiumkohlenwasserstoffe in Betracht, die auch in der ersten Verfahrensstufe verwendet werden können; vorzugsweise wird der gleiche Initiator wie in der ersten Verfahrensstufe benutzt. Es ist dabei günstig, wenn der zusätzliche frische Initiator der Reaktionslösung zugegeben wird, bevor man den weiteren Anteil der monovinylaromatischen Verbindung zusetzt.

In der zweiten Verfahrensstufe werden dabei die gleichen Polymerisationsbedingungen aufrecht erhalten wie in der ersten Verfahrensstufe, wobei auch jetzt wieder bis zum praktisch vollständigen Umsatz der zugegebenen monovinylaromatischen Verbindung polymerisiert wird.

Dabei werden die in der zweiten Verfahrensstufe zugegebenen Monomeren sowohl an die aktiven, lithiumterminierten Kettenenden der zuvor in der ersten Verfahrensstufe gebildeten Polymersegmente $A^1$ angelagert als auch werden durch den zusätzlichen frischen Initiator neue Ketten von lebenden Polymeren gebildet.

Nach Auspolymerisiation der Monomeren in der zweiten Verfahrensstufe liegt somit eine Lösung vor, die lebende Polymerisate der monovinylaromatischen Verbindung mit im Durchschnitt zwei unterschiedlichen Ketten längen enthält. In der Reaktionslösung sind zum einen die aktiven, lebenden nicht-elastomeren Polymersegmente des Typs ($A^1$-$A^2$)-Li vorhanden, die durch Anlagerung der Monomeren der zweiten Verfahrensstufe an die in der ersten Verfahrensstufe vorgebildeten aktiven, lebenden Polymersegmente $A^1$-Li entstanden sind, zum anderen sind aktive, lebende nicht-elastomere Polymersegmente des Typs $A^2$-Li vorhanden, die durch Polymerisation der Monomeren der zweiten Verfahrensstufe mit dem zusätzlich zugegebenen, frischen Initiator gebildet worden sind. Das Verhältnis, in dem diese zwei Typen von nicht-elastomeren Polymersegmenten auf der Basis der monovinylaromatischen Verbindungen in der Reaktionslösung vorliegen, entspricht demzufolge dem Initiator-Verhältnis der ersten und zweiten Verfahrensstufe. Beide Typen der Polymersegmente ($A^1$-$A^2$) und $A^2$ haben an ihrem einen Kettenende aktive, reaktionsfähige Lithium-Kohlenstoff-Bingungen, die zur weiteren Anlagerung von Monomeren fähig sind.

In einer dritten Verfahrensstufe werden dann an die aktiven Kettenenden der beiden Typen der nicht-elastomeren Polymersegmente ($A^1$-$A^2$)-Li und $A^2$-Li die Polymersegmente B und hieran anschließend die Polymersegmente $A^3$ unter Bildung der Polymerblöcke ($A^1$-$A^2$-B-$A^3$) und ($A^2$-B-$A^3$), die die Verzweigungen des Blockcopolymerisats bilden, anpolymerisiert. Hierzu wird zu der auspolymerisierten Reaktionslösung der zweiten Verfahrensstufe eine Monomer-Mischung aus der restlichen monovinylaromatischen Verbindung und der Gesamtmenge des konjugierten Diens zugesetzt. Die Menge an konjugierten Dienen beträgt dabei 5 bis 40 Gew.%, vorzugsweise 10 bis 30 Gew.%, der zur Herstellung der erfindungsgemäßen verzweigten Blockcopolymerisate insgesamt eingesetzten Monomeren. Die Monomer-Mischung wird unter den gleichen Polymerisationsbedingungen, wie sie für die beiden ersten Verfahrensstufen gelten, wiederum bis zum praktisch vollständigen Umsatz der Monomeren polymerisiert.

Infolge der unterschiedlichen Copolymerisationsparameter polymerisieren die konjugierten Diene dabei wesentlich rascher als die monovinylaromatischen Verbindungen, so daß nach Zugabe der Monomer-Mischung in der dritten Verfahrensstufe zunächst überwiegend die konjugierten Diene und nur vereinzelt die monovinylaromatischen Verbindungen einpolymerisiert werden.

Erst gegen Ende der Dien-Polymerisation, d.h. wenn fast alles konjugiertes Dien auspolymerisiert ist, setzt die Polymerisation der monovinylaromatischen Verbindungen im merklichem Maße ein, so daß der überwiegende Anteil -in der Regel mehr als 70 und überwiegend mehr als 80 Gew.% -der in der Monomer-Mischung enthaltenen monovinylaromatischen Verbindungen erst nach Verbrauch der konjugierten Diene polymerisiert.

In der dritten Verfahrensstufe wird also an die nicht-elastomeren Polymersegmete ($A^1$-$A^2$) bzw. $A^2$ zunächst ein elastomeres Polymersegment B auf der Basis der konjugierten Diene anpolymerisiert, welches ein Copolymerisat aus hauptsächlich dem konjugierten Dien und geringen Mengen der monovinylaromatischen Verbindung ist, wonach anschließend ein nicht-elastomeres Polymersegment $A^3$ gebildet wird, welches nur aus den monovinylaromatischen Verbindungen aufgebaut ist. Da der Anteil der monovinylaromatischen Verbindungen gegen Ende des Polymersegments B imner stärker zunimmt und der Anteil des konjugierten Diens dementsprechend ständig abnimmt, ist der Übergang zwischen den so gebildeten Polymersegmenten B und $A^3$ nicht scharf, sondern er erfolgt allmählich; vielfach spricht man daher auch von einem "verschmierten" Übergang zwischen den Segmenten. Dieser Tatsache wird in der allgemeinen Formel für die erfindungsgemäßen verzweigten Blockcopolymerisate durch das Symbol $\rightarrow$ Rechnung getragen.

Nach Auspolymerisation der Monomeren-Mischung in der dritten Verfahrensstufe liegt in der Reaktionslösung ein Gemisch aus Lebenden, linearen Blockcopolymerisaten des Typs ($A^1$-$A^2$-B $\rightarrow$ $A^3$)-Li und ($A^2$-B $\rightarrow$ $A^3$)-Li mit aktiven reaktionsfähigen Lithium-Kohlenstoff-Bindungen jeweils am freien Ende der Polymersegmente $A^3$ vor.

In einer weniger bevorzugten, vereinfachten Ausführungsform, die jedoch keine optimalen Ergebnisse erzielt, kann die Polymerisation auch in nur 2 Verfahrensstufen erfolgen, indem der gesamte Katalysator vorgelegt wird und im Anschluß an die Verfahrensstufe 1 das gesamte restliche Dien und Styrol auf das Hartsegment $A^1$ wie in der Verfahrensstufe 3 beschrieben, aufpolymerisiert wird. In diesem Fall entstehen Blockcopolymere mit einheitlicher Länge.

Die aktiven, lebenden linearen Blockcopolymeren, werden nun zum Einbau der Alkylenoxideinheit zunächst mit einem Alkylenoxid umgesetzt. Geeignet sind z.B. Propylenoxid oder höhere geradkettige oder verzweigte Alkylenoxide. Bevorzugt wird jedoch Ethylenoxid, das als einziges bei dieser Reaktion eine primäre endständige Li-Alkoholatgruppe bildet, die besser als die aus anderen Alkylenoxid entstehenden sekundären Alkoholatgruppen für die folgende Umsetzung mit cyclischen Säureanhydriden geeignet sind.

Die Umsetzung von lithiumterminierten lebenden Polymerisaten mit Ethylenoxid ist allgemein bekannt und beispielsweise in der DE-OS 27 23 905 beschrieben. Im allgemeinen reicht die Zugabe von mindestens 1 Mol, vorzugsweise 1,5 bis 2 Mol Alkylenoxid je Mol lebendem Polymer aus. Die Umsetzung sollte, um unerwünschte Nebenreaktionen zu vermeiden, zwischen 0 und 70°C, vorzugsweise zwischen 20 und 50°C erfolgen. Sie ist vollstän dig, wenn die intensive Orangefarbe des lebenden Polystyrylanions in farblos oder hellgelb umgeschlagen ist.

Für die folgende Umsetzung mit cyclischen Säureanhydriden sind vorzugsweise cyclische Dicarbonsäureanhydride geeignet. Als Beispiel seien genannt Bernsteinsäureanhydrid sowie dessen Alkyl und Halogensubstituenten, Maleinsäureanhydrid, Glutarsäureanhydrid, Methylenbernsteinsäureanhydrid, Dimethylenbernsteinsäureanhydrid, Phthalsäureanhydrid die verschiedenen Naphthalindicarbonsäureanhydride, Cyclohexendicarbonsäureanhydrid usw. Diese Aufzählung ist nicht vollständig. Grundsätzlich sind alle cyclischen Anhydride von Dicarbonsäuren geeignet, die die oben angezeigte Gruppierung X auszubilden vermögen.

Für die Umsetzung der polymeren Lialkoholate mit dem cyclischen Säureanhydrid müßten im allgemeinen mehr als stöchimotrische Mengen Anhydrid je Mol Polymermolekül eingesetzt werden, um ausreichenden Umsatz zu erzielen. Ausreichend ist ein Umsatz von wenigstens 50 % besser 60 %, optimal > als 70 %. Derartige Umsätze werden erreicht, wenn mindestens 1,25, besser 1,75 Äquivalente cyclisches Säureanhydrid je Mol Polymer eingesetzt werden. Die optimale Reaktionstemperatur liegt bei 40-60°C, wobei ca. 1 Stunde Reaktionszeit ausreichen. Der Überschuß an cyclischem Säureanhydrid sollte jedoch so klein wie möglich gehalten werden, da dieses die Eigenschaften des Endproduktes verschlechtert.

Es schließt sich die Umsetzung mit der Aluminiumverbindung an, mit der das Polymere einen Komplex bildet. Als Aluminiumverbindungen sind besonders geeignet die Alkoholate, die in organischen Lösungsmitteln wie Toluol gut löslich sind und in dieser Form zur Reaktion gebracht werden. Besonders geeignet ist z.B. das Al-triisopropylat. Anstelle der Alkoholate können jedoch auch Aluminiumtrialkyle zur Umsetzung gebracht werden, wobei jedoch anschließend eine Wasserzugabe erforderlich ist. Es entsteht hierbei ein Aluminium-Hydroxid-Komplex. Auch bei Verwendung der Alkoholate kann die Zugabe von geringen Wassermengen zur Reaktionslösung zweckmäßig sein.

Die Bildung der Al-Komplexe macht sich durch eine starke Erhöhung der Lösungsviskosität bemerkbar, wobei diese im allgemeinen bei 3-facher molarer Menge an Aluminiumverbindung je Mol Polymer einen Grenzwert erreicht. Es sollten daher mindestens 0,3 Mol Al-verbindung, vorzugsweise $\leq$ als ein Mol Aluminiumverbindung eingesetzt werden. Diese Komplexierung der Endgruppen ist mit einer drastischen Verbesserung der Eigenschaften der Endprodukte verbunden.

Vor der Umsetzung mit Aluminiumverbindung kann das Carboxyl-funktionalisierte Blockcopolymer gegebenenfalls noch hydriert werden. Die Hydrierung kann dabei selektiv oder nicht selektiv erfolgen und wird normalerweise mit Hilfe von molekularem Wasserstoff und Katalysatoren auf Basis von Metallen ode Metallsalzen der 8. Gruppe des Periodensystems durchgeführt. Dies kann entweder in homogener Phase mit Katalysatoren auf Basis von Salzen, insbesondere den Carboxylaten, Alkoxiden oder Enolaten des Cobalts, Nickels oder Eisens, die mit Metallalkylen, insbesondere Aluminiumalkylen, reduziert sind, geschehen, wie es z.B. in der US-PS 3 113 986, der DE-AS 12 22 260 oder der DE-OS 20 13 263 beschrieben ist. Dabei werden unter milden Bedingungen bei Wasserstoffdrücken zwischen 1 und 100 bar und Temperaturen zwischen 25 und 150°C die olefinischen Doppelbindungen hydriert.

Die Hydrierung kann auch in heterogener Phase mit Nickel-oder Platinmetallen als Katalysatoren bei Wasserstoffdrücken von 20 bis 300 bar und Temperaturen zwischen 40 und 300°C durchgeführt werden (z.B. nach der DE-AS 11 06 961 oder der DE-OS 15 95 345). Dabei werden nach den olefinischen Doppelbindungen auch die aromatischen Doppelbindungen hydriert. Die Hydrierung wird vorzugsweise in demselben Lösungsmittel durchgeführt wie die vorangegangene Polymerisation. Das Blockcopolymerisat kann dabei partiell oder vollständig hydriert werden. Vorzugsweise werden, selektiv die olefinischen Doppelbindungen des Polymerisats hydriert, wobei die hydrierten Blockcopolymerisate vorzugsweise weniger als 10 % und insbesondere weniger als 3 % olefinische Doppelbindungen enthalten.

Anschließend an die Umsetzung mit der Aluminiumverbindung wird das Blockcopolymere in üblicher Weise aus der Reaktionslösung isoliert, beispielsweise durch Ausfällen und Abfiltrieren des Polymerisates aus der Reaktionslösung.

Die Polymeren gemäß der Erfindung liegen wahrscheinlich so vor, daß die komplexierten Kettenenden aggregiert sind. Der erhöhten Lösungsviskosität entspricht ein Anstieg des scheinbaren Molekulargewichtes auf den 3-6 fachen Wert des Ausgangspolymeren.

Die erfindungsgemäßen Blockcopolymeren besitzen bei gleicher Lösungsviskosität neben hoher Transparenz, Klarheit, Schlagzähigkeit und Streckspannung eine unerwartet hohe Fließfähigkeit, im Vergleich zu herkömmlichen Polymeren. Vergleicht man erfindungsgemäße Polymeren mit höherer Viskositätszahl mit bekannten Polymeren gleicher Zusammensetzung, jedoch niedrigerer VZ, so besitzen die erfindungsgemäßen Polymeren bei guter Verarbeitbarkeit ein höheres mechanisches Niveau. Sie sind dann besonders gut geeignet zur Herstellung von Blasfolien, wo sie wenig Stippen zeigen und wenig Neigung zum Aufreißen, welches ein Nachteil bekannter Polymerisate ist. Außerdem kann man den Diengehalt bei vergleichbaren mechanischen Eigenschaften weiter absenken als bei herkömmlichen Polymeren.

Die Erfindung wird durch die folgenden Beispiele erläutert. Maß für das Molekulargewicht ist die Viskositätszahl, gemessen an einer Probe, die vor der Umsetzung mit Ethylenoxid entnommen wird, gemessen in 0,5 %iger Lösung Toluol bei 25°C. Lochkerbschlagzähigkeit $a_{LK}$ wurde bestimmt nach DIN 53 753 an gepreßten Formkörpern. Streckspannung $G_S$, Reißfestigkeit $G_R$und Dehnung $E_R$ wurden am gepreßten Schulterstab nach DIN 53 455 gemessen. Stippen wurden durch Auszählen einer 70 µm starken Blasfolie beurteilt, die mit einem Tröster MP 30 Extruder hergestellt wurde, bei einem Durchsatz von 10 kg/Std. und einer Massetemperatur von 200°C.

## Beispiel 1 bis 3

In der folgenden Vorschrift wird die Herstellung von erfindungsgemäßen glasklaren, schlagzähen Blockpolymerisate mit a) 25 % (Beispiel 1), b) 15 % (Beispiel 2) und c) 10 % (Beispiel 3) Butadiengehalt beschrieben. die jeweiligen Mengen an Reaktanten sind entsprechend mit a), b) und c) gekennzeichnet.

In einem 10 l Druckkessel werden 5390 m³ Cyclohexan und a) 539 g, b) 612 g, c) 648 g Styrol vorgeledgt und unter Inertgasatmosphäre mit einer 1,5 %igen s-Butyllithiumlösung bis zur gerade beginnenden Polymerisation austitriert. Anschließend werden 3 mMol s-Butyllithium (als 1,5 molare Lösung in Hexan) zugegeben und bei 50 bis 60°C etwa eine Stunde bis zur vollständigen Umsetzung polymerisiert. Zu der aktiven Reaktionslösung werden erneut 15 mMol s-Butyllithium zugegeben, anschließend a) 326 g, b) 373 g, c) 395 g zugesetzt un d wurde ein Gemisch von a) 179 g Styrol und 375 g Butadien, b) 205 g Butadien, c) 217 g Styrol und 140 g Butdien zugesetzt und wiederum bis zur vollständigen Umsetzung der Monomeren bei 50 bis 60°C (1 Std.) polymerisiert. Die Viskositätszahl in Toluol betrug a) 75, b) 73 und c) 72. Danach wurde bei 40°C 36 mMol Ethylenoxid zugesetzt und eine weitere Stunde gerührt. Sodann wurden 36 mMol Bernsteinsäureanhydrid in Form einer feinteiligen Suspension in Cyclohexan, die durch 30 minütige Behandlung mit einem Ultra-Turrax-Mischer oder Mahlen in eine Kugelmühle hergestellt wurd,e zugegeben und eine weitere Stunde bei 40°C gerührt. Die Viskositätszahl stieg auf a) 103, b) 105 und c) 99). Sodann wurden 36 mMol Aluminium-ti-isopropanolat untergemischt, wobei die Viskositätszahl auf a) 115, b) 120 und c) 112 anstieg. Die Polymeren wurden nach Zugabe von 15 g Di-t-butyl-p-kresol durch Eingießen in ca. 20 l Methanol unter intensivem Rühren gefällt und getrocknet. Die Eigenschaften sind der folgenden Tabelle zu entnehmen.

Die folgenden Vergleichsbeispiele 1, 2 und 3 werden gekennzeichnet mit d, e und f.

## Vergleiche

In einem 10 l-Druckkessel wurden 5390 m³ Cyclohexan d) 535 g, e) 612 g, f) 648 g Styrol vorgelegt und unter Inertgasatmosphäre mit s-Butyllithium bis zur gerade beginnenden Polymerisation austitriert. Anschließend wurden d) 6 mMopl, b) 4,2 mMol, f) 3,5 mMol s-Butyllithium zugegeben und 1 Stunde polymerisiert. Dann wurden weitere d) 30, e) 21,3, f) 17,5 mMol s-Butyllithium und darauf d) 326 g e) 373 g, f) 395 g Styrol zugesetzt und bei 50-60°C polymerisiert. Nun wurde ein Gemisch aus d) 179 g Styrol und 375 g Butadien, e) 205 g Styrol und 210 g Butadien und f) 217 g Styrol und 140 g Butadien zugesetzt und ca. 2,5 Stunden bei 50-60°C polymerisiert. Danach wurde d) 4,9 g, e) 3,8 g, f) 286 g eines epoxierten Leinöles (Handelsname: Edenol der Fa. Henkel, Düsseldorf) zugesetzt und 15 Minuten bei 60°C gerührt. Danach wurde über Nacht unter Rühren mit Kohlendioxid behandelt und nach Stabilisierung mit Di-t-butyl-p-kresol wie bei den Beispielen 1 bis 3 beschrieben, durch Fällen mit Methanol und Trocknen im Vakuum aufgearbeitet.

| Beispiel Nr. | Gehalt an Butadien T1 | VZ $cm^3/g$ | MFI (5 p; 200$^0$C) | $\sigma_S$*** $N/mm^2$ | $\sigma_R$*** $N/mm^2$ | $\varepsilon_R$*** % | $a_L$**** $KJ/M^2$ | Stippen-* zahl/$m^2$ | Verarbeitungs-verhalten ** |
|---|---|---|---|---|---|---|---|---|---|
| 1 | 25 | 115 | 4 | 21 | 25 | 350 | 58 | 50 | kein Aufr. |
| 2 | 15 | 120 | 3,2 | 33 | 24 | 280 | 25,1 | 30 | " |
| 3 | 10 | 112 | 4,3 | 40 | 26 | 59 | 9 | 10 | " |
| Vergleich 1 | 25 | 72 | 14 | 20 | 17 | 260 | 29 | 300 | reißt häufig |
| 2 | 15 | 80 | 4,0 | 23 | 19 | 24 | 5 | 200 | reißt |
| 3 | 10 | 73 | 17 | - | 40 | 3 | 1 | 200 | reißt sehr häufig |

* Stippen durch Auszählen an einer 70 $\mu m$ starken Blasfolie

** Beurteilt wurde die Häufigkeit des Aufreißens einer Blasfolie (Tröster Extruder UP30 Massetemperatur 200$^0$C, 10 kg/h Durchsatz)

*** Zugversuch, gemessen an gepreßten Stäben, KT = 230$^0$C, $\sigma_S$ = Streckspannung, $\sigma_R$ = Reißspannung $\varepsilon_R$ = Streckdehnung, Normstab 3 nach DIN 53455

**** Lochschlagzähigkeit nach DIN 53 753

**Ansprüche**

1. Block-Polymerisate von vinylaromatischen Verbindungen und konjugierten Dienen mit Säureendgruppen, dadurch gekennzeichnet, daß sie als Komplexe der allgemeinen Formel vorliegen

$[R^1\text{-}Y_a\text{-}X^{\ominus}]\ Li^{\oplus}\ [Al(OR^2)_3]_n$

worin

$R^1$ ein Block-Polymerisat einer monovinylaromatischen Verbindung und eines konjugierten Diens das 60 bis 95 Gew.% von monovinylaromatischen Verbindungen und 40 bis 5 Gew.% von konjugierten Dienen einpolymerisiert enthält,

Y eine Alkylenoxideinheit,

X eine Gruppierung der allgemeinen Formel

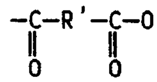

worin R′ ein zweiwertiger organischer Rest ist,

$R^2$ Wasserstoff oder ein Alkylrest,

a eine Zahl von 1 bis 10,

n eine Zahl zwischen 0,3 bis 3 sein kann.

2. Block-Polymerisat nach Anspruch 1, dadurch gekennzeichnet, daß R′ gleich

$-CH_2-CH_2-$, $-CH{=}CH-$, $-CH_2-CH_2-CH_2$, 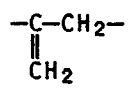, 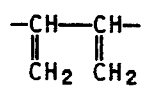,

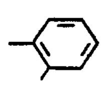, 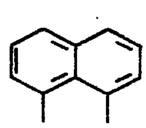, 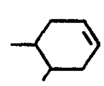, 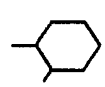, 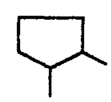

ist; wobei diese Reste selbst wiederum durch kurze Alkylketten und/oder Halogen substituiert sein können.

3. Verfahren zur Herstellung von Blockpolymerisaten von vinylaromatischen Verbindungen und konjugierten Dienen durch anionische Polymerisation dieser Verbindung mit Lithiumalkylen, Umsetzung der erhaltenen lebenden Blockpolymerisate mit Alkylenoxid und cyclischen Säureanhydriden, dadurch gekennzeichnet, daß man die erhaltenen Umsetzungsprodukte mit Aluminiumalkoholaten oder mit Aluminiumtrialkylen und Wasser umsetzt.

4. Verwendung der Blockpolymerisate nach Anspruch 1 als Formmassen.

5. Verwendung der Blockpolymerisate nach Anspruch 1 zur Modifizierung thermoplastischer Massen.

Europäisches Patentamt

# EUROPÄISCHER RECHERCHENBERICHT

Nummer der Anmeldung

EP 86 11 4232

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 352 008 (CPC INTERNATIONAL)<br>* Patentanspruch 22 * & DE-A-27 23 905 (Cat. D)<br>----- | | C 08 F 8/00<br>C 08 F 8/42<br>C 08 F 297/04 |
| | | | **RECHERCHIERTE SACHGEBIETE (Int. Cl.4)** |
| | | | C 08 F<br>C 08 C |

Der vorliegende Recherchenbericht wurde für alle Patentansprüche erstellt.

| Recherchenort | Abschlußdatum der Recherche | Prüfer |
|---|---|---|
| DEN HAAG | 21-01-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument